# EUROPÄISCHE PATENTSCHRIFT

(11) **EP 3 627 100 B1**
(45) Veröffentlichungstag und Bekanntmachung des Hinweises auf die Patenterteilung: **01.12.2021**
(21) Anmeldenummer: 18195689.7
(22) Anmeldetag: 20.09.2018
(51) Int. Cl.: G01C 15/00, G02B 5/122, G01S 5/16, G01C 15/06, G01S 17/42, G01S 7/481, G02B 13/06

(54) **RETROREFLEKTOR MIT FISCHAUGENOBJEKTIV**
RETRO REFLECTOR WITH FISHEYE LENS
RÉTRORÉFLECTEUR À LENTILLE AVEC UN GRAND ANGLE

(43) Veröffentlichungstag der Anmeldung: 25.03.2020
(73) Patentinhaber: Hexagon Technology Center GmbH, 9435 Heerbrugg (CH)
(72) Erfinder: JENSEN, Thomas, CH-9400 Rorschach (CH); SCHWENDENER, Andreas, CH-7000 Chur (CH); YANG, Zheng, D-88046 Friedrichshafen (DE); STIGWALL, Johan, CH-9008 St. Gallen (CH); BRÜHLMANN, Danick, CH-9422 Staad (CH)
(74) Vertreter: Kaminski Harmann

(56) Entgegenhaltungen:
- EP-A1- 1 200 853
- EP-A1- 2 916 104
- DE-A1-102012 101 640
- US-A1- 2018 017 384

## Beschreibung

Die Erfindung betrifft eine Reflektoranordnung vorzugsweise zum Einsatz im Bereich der geodätischen Vermessung, welche eine Bestimmung der eigenen Orientierung relativ zu einem Vermessungsgerät bereitstellt.

Vermessungssysteme zum Bestimmen von Positionen im Geodäsiebereich oder Baustellen- bzw. Konstruktionsbereich sind vielfältig bekannt. Beispiel hierfür sind Systeme aus einem stationären Vermessungsgerät mit Richtungs- und Entfernungsmesser wie z.B. eine Totalstation, und einem einen zu vermessenden oder zu kennzeichnenden Punkt markierenden Messhilfsinstrument wie z.B. ein Lotstab. Eine geodätische Messvorrichtung des Stands der Technik ist beispielsweise in der Veröffentlichungsschrift EP 1 686 350 beschrieben. Auch sind Layout-Systeme bekannt aus einem stationären Laseremitter, welches mittels Laserstrahl eine Positionsreferenz erzeugt, welche von einem Laserreceiver am zu markierenden Punkt empfangbar ist. Es erfolgen also durch das Zusammenspiel eines stationären, bekannt verorteten und damit eine Positionsreferenz bietenden Geräts mit einem empfangenden oder markierenden bzw. anzielbaren Messhilfsmittel Vermessungstätigkeiten, wodurch präzise die Position einzelner Geländepunkte wie Landvermessungspunkte oder Punkte an Baustellenobjekten, z.B. im Innen- oder Aussenbereich von Gebäuden oder im Strassenbau, im Hinblick auf Positionsmessung oder Abstecken bestimmt werden kann.

Bezüglich der Ausgestaltung der Vermessungsgeräte sind zahlreiche unterschiedliche Ausführungsformen bekannt. So verfügen z.B. moderne Totalstationen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können des Weiteren über eine Funkdatenschnittstelle verfügen zum Aufbau einer Funkverbindung zu externen Peripheriekomponenten wie z.B. zu dem Messhilfsinstrument oder zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann.

Gängige Vermessungsgeräte weisen inzwischen standardmässig eine automatische Zielverfolgungs-Funktion für als Ziel-Reflektor dienende Prismen (ATR: "Automatic Target Recognition") auf. Dafür sind beispielsweise eine weitere separate ATR-Lichtquelle und ein spezieller, für diese Wellenlänge sensitiver ATR-Detektor (z.B. CCD-Flächensensor) zusätzlich im Teleskop integriert.

In vielen geodätischen Anwendungen erfolgt eine Vermessung von Punkten, indem speziell ausgestaltete Messhilfsinstrument bzw. Zielobjekte (z.B. Vermessungsstäbe) am Zielpunkt platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden typischerweise zur Steuerung des Messvorgangs sowie zur Festlegung oder Registrierung von Messparametern Daten, Anweisungen, Sprache und weiteren Informationen zwischen Zielobjekt und zentralem Messgerät übertragen. Beispiele für solche Daten sind Identifikationsinformation für das Zielobjekt (z.B. Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen. Die US 2018/0017384 A1 offenbart einen Vermessungsstab mit einem Kameramodul.

Zusätzlich ist eine Bestimmung der räumlichen Orientierung bzw. einer Neigung bezüglich jeweils relevanter Raumrichtungen des jeweiligen Hilfsinstruments erforderlich oder definiert einzustellen (z.B. lotrecht), um zusammen mit der bestimmten Position des am Hilfsinstrument angeordneten Reflektors den mittels des Instruments zu bestimmenden Messpunkt abzuleiten. Eine solche Orientierung kann beispielsweise mittels eines Neigungssensors, welcher in einer bestimmten Position und Lage relativ zu dem Reflektor vorgesehen ist, bestimmt werden. Ein Verfahren und System zum Ermitteln einer Position und Orientierung eines Objekts in einem Bezugssystem ist durch die DE 10 2012 1010 640 A1 offenbart.

Der Einsatz von Neigungssensoren erlaubt eine einfache Lagebestimmung in zwei rotatorischen Freiheitsgraden. Hierdurch kann ein Rollen und ein Nicken (engl.: roll, pitch) des Messhilfsinstruments, also eine jeweilige Rotation um eine horizontale Achse, bestimmt werden. Technisch komplexer gestaltet sich jedoch die Bestimmung einer dritten Raumrichtung, einer Rotation um eine Vertikalachse, wie z.B. der Lotstock-Längsachse, das sogenannte Gieren (engl.: yaw) des Messhilfsinstruments.

Hierfür sind aus dem Stand der Technik Lösungen mittels zusätzlicher Vorrichtungen seitens des Messhilfsinstruments bekannt. Die jeweilige Vorrichtung wird dabei z.B. von Seiten der Totalstation etc. beleuchtet und anhand eines Einfallswinkels oder einer Abbildung eines Codes kann auch auf den Gierwinkel rückgeschlossen werden. Solche Lösungen sind z.B. aus der EP 2 916 104 A1 bekannt.

Nachteilig bei derartigen Lösungen ist, dass zusätzlich zum typischerweise vorhandenen Reflektor mindestens eine weitere Komponente am Messhilfsinstrument vorgesehen ist und dadurch eine erhöhte Komplexität bezüglich der Ausgestaltung solcher Instrumente gegeben ist und/oder die Instrumente eine relative grosse räumliche Ausdehnung aufweisen. Zudem gelingt eine Bestimmung der Ausrichtung insbesondere hinsichtlich des Einsatzes von Neigungssensoren nur im Rahmen der jeweiligen limitierten Sensorgenauigkeit. Des Weiteren bergen die zusätzlichen Komponenten jeweils zusätzliche Fehlerquellen hinsichtlich der Positions- und Orientierungsbestimmung (z.B. führt ein durch eine mechanische Beanspruchung nicht bestimmter Winkelversatz des Neigungssensors relativ zum Reflektor zu geringerer Genauigkeit bzw. verfälschten Werten).

Auch eine Lösung gemäss der EP 1 200 853, wobei ein Prisma eine kleine Durchtrittsöffnung für den Messstrahl aufweist und dieser teilweise direkt auf einen Sensor trifft (ähnlich wie bei der Abbildung einer Lochbildkamera), weist hinsichtlich erreichbarer Genauigkeiten erhebliche Nachteile auf. Eine präzise Bestimmung der Position der Strahlung auf dem Sensor ist nur stark bedingt gegeben, da diese Bestimmungsgenauigkeit massgeblich von der Messdistanz, der Strahlqualität und den Umweltbedingungen (Nebel, Regen, Staub etc.) abhängt. Leichte Verschmutzungen, z.B. auch in Form eines Fingerabdrucks an der Prismenaussenfläche, können zu einer asymmetrischen Abbildung oder Ablage der durch die kleine Öffnung transmittierten Strahlung auf dem Sensor und damit bei der Auswertung z.B. über eine schwellwertbasierte Schwerpunktbestimmung, zu einem Messfehler führen. Da nur ein einziger sehr kleiner Spot ausgewertet wird, sind entsprechende Fehlereinflüsse praktisch nicht detektierbar und führen zu einer stark eingeschränkten Robustheit für Messungen im Aussenbereich. Auch können bei einer Distanzmessung zu dieser Einheit aufgrund strukturell bedingter, reflektorinterner Reflexionen erhebliche Messfehler bei der Distanzbestimmung zu dieser Einheit auftreten.

Eine Aufgabe der vorliegenden Erfindung ist es daher, eine verbesserte, kompakte Vorrichtung bereitzustellen, welche eine zuverlässigere und genauere Orientierungsbestimmung, insbesondere mit bis zu drei Freiheitsgraden (drei rotatorische Freiheitsgrade), für Vermessungszwecke ermöglicht. Insbesondere soll eine zuverlässigere und genauere Lagebestimmung in bis zu sechs Freiheitsgraden, in drei Translations- und in drei Rotationsfreiheitsgraden, bereitgestellt werden.

Diese Aufgabe wird durch die Verwirklichung der kennzeichnenden Merkmale des unabhängigen Anspruchs 1 gelöst. Merkmale, die die Erfindung in alternativer oder vorteilhafter Weise weiterbilden, sind den abhängigen Patentansprüchen zu entnehmen.

Die Erfindung beruht auf der Idee der einfallswinkelkorrelierten Detektion von in einen Reflektor eintretender elektromagnetischer Strahlung.

Die Erfindung betrifft eine Reflektoranordnung, insbesondere für die industrielle bzw. geodätische Vermessung. Die Reflektoranordnung weist einen Retroreflektor auf, der eine Positionsbestimmung für die Reflektoranordnung mittels paralleler, insbesondere koaxialer, Messstrahlreflexion bereitstellt und eine Durchtrittsfläche für zumindest einen Teil von in den Retroreflektor eintretender Messstrahlung als Orientierungsmessstrahlung bereitstellt.

Als Retroreflektor werden in der geodätischen Vermessung typischerweise Tripelprismen oder Tripelspiegel verwendet, die eine entsprechende parallele Strahlreflexion bereitstellen. Wird der Reflektor mit einem Vermessungsgerät angezielt, so wird die Messstrahlung zum Vermessungsgerät zurück reflektiert und anhand des so am Vermessungsgerät erfassbaren Signals kann eine Entfernung zum Reflektor bestimmt werden, z.B. mittels Laufzeitberechnung. Ein Teil, insbesondere ein verhältnismässig sehr kleiner Teil des gesamten Messstrahlungsquerschnitts, kann durch den Reflektor hindurchtreten und wird nicht zurück reflektiert. Die hierzu vorgesehene Durchtrittsfläche kann z.B. durch abtrennen einer Ecke eines Tripelprismas erzeugt werden.

Die Reflektoranordnung weist zudem eine erste Sensoranordnung auf, mittels welcher die durch den Retroreflektor durchtretende Orientierungsmessstrahlung erfassbar ist. Die Sensoranordnung ist bezüglich der Einfallsrichtung der Messstrahlung in die Reflektoranordnung dem Retroreflektor nachgeordnet.

Die erste Sensoranordnung weist eine ein Fischaugenobjektiv bereitstellende erste optische Baugruppe und einen ersten Sensor auf. Die optische Baugruppe wirkt entsprechend wie eine Fischaugenoptik und weist vorzugsweise dessen vorteilhafte Eigenschaften hinsichtlich des hierdurch bereitstellbaren gesamten Sichtfeldes bereit.

Der Retroreflektor und die erste Sensoranordnung sind derart angeordnet, dass durch den Retroreflektor durchtretende Orientierungsmessstrahlung mittels der ersten optischen Baugruppe auf die Detektionsfläche des ersten Sensors umlenkbar bzw. projizierbar, insbesondere fokussierbar, ist. Ein "Projizieren" der Orientierungsmessstrahlung soll hier insbesondere synonym zu einem "Umlenken und insbesondere Fokussieren" der Strahlung auf die Detektionsfläche verstanden werden.

Die Vorsehung einer solchen optischen Baugruppe stellt eine azimutale Rundumdetektion über einen bestimmten Elevationsbereich bereit.

Die optische Achse der ersten optischen Baugruppe ist insbesondere im Wesentlichen parallel zur Durchtrittsfläche orientiert.

Ferner kann sich eine durch die erste optische Baugruppe definierte optische Achse im Wesentlichen orthogonal zu einer Detektionsfläche des ersten Sensors erstrecken.

In einer Ausführung kann die erste optische Baugruppe ein Sichtfeld mit einem (gesamten) Elevationserfassungswinkel von bis zu 130° bezüglich der optischen Achse und mit einem azimutalen Erfassungswinkel von 360° definieren. Die Detektionsfläche des ersten Sensors ist dabei derart angeordnet, dass das Sichtfeld der optischen Baugruppe auf die Detektionsfläche abbildbar ist.

Der erste Sensor kann zur Bestimmung einer Auftreffposition der Orientierungsmessstrahlung auf der Detektionsfläche ausgestaltet sein, insbesondere zur Bestimmung eines Schwerpunkts der Auftreffposition.

Der erste Sensor kann zur Bilderfassung ausgebildet sein, wobei mittels des Sensors die Auftreffposition der Orientierungsmessstrahlung in einem Bild erfassbar und als Bildposition im Bild bestimmbar ist.

Gemäss einer Ausführungsform kann die Reflektoranordnung eine Auswerteeinheit aufweisen, die zur Ableitung einer räumlichen Orientierung der Reflektoranordnung relativ zu der in den Retroreflektor eintretenden Messstrahlung bezüglich zumindest eines Freiheitsgrads anhand der Auftreffposition eingerichtet ist, insbesondere wobei ein Gierwinkel relativ zu einer Ausbreitungsachse der eintretenden Strahlung bestimmbar ist, insbesondere mittels fortlaufender Erfassung der Auftreffposition.

Die Auftreffposition der Strahlung auf der Detektionsfläche des Sensors korreliert mit einem Einfallswinkel in die Reflektoranordnung. Anhand einer Kalibrierung des Sensors kann anhand der bestimmten Auftreffposition ein Einfallswinkel bestimmt werden. Hierzu kann z.B. eine Look-Up Tabelle oder eine die Korrelation ausdrückende Funktion herangezogen werden.

In einer Ausführungsform kann die Reflektoranordnung eine Steuerungseinheit mit einer Erfassungsfunktionalität aufweisen, wobei die Erfassungsfunktionalität zur ortsaufgelösten Detektion der Orientierungsmessstrahlung mittels mehrfachem Auslesen des Sensors konfiguriert ist. Dabei erfolgen zumindest ein erstes Auslesen mit einer Messinformation bezüglich auf die Detektionsfläche auftreffender Orientierungsmessstrahlung und ein zweites Auslesen ohne diese Messinformation, insbesondere wobei das erste und das zweite Auslesen synchronisiert mit einem An- und Ausschalten einer Emission der Messstrahlung erfolgen. Aus den erfassten Messdaten kann eine Differenzinformation abgeleitete werden, welche z.B. um ein mit der Laserstrahlung miterfasstes Hintergrund- oder Umgebungslicht bereinigt ist.

Eine Bilderfassung mittel des Sensors kann also z.B. in Form einer alternierenden Bilderfassung abwechselnd mit und ohne eintretender Laserstrahlung erfolgen. Hierzu wird die Laserlichtemission seitens des Vermessungsgeräts (z.B. Totalstation) gesteuert ein- und ausgeschaltet. Als Resultat lässt sich ein Differenzbild erzeugen, welches hinsichtlich des bei ausgeschaltetem Laser erfassten Umgebungslicht bereinigt ist, d.h. die bei ausgeschaltetem Laser erhaltenen Bildinformation kann von der Bildinformation mit eingeschaltetem Laser abgezogen werden.

Die Bildaufnahme ist ferner insbesondere mit der Schaltung des messgeräteseitigen Lasers synchronisiert:
- Ein Vermessungsgerät (z.B. Totalstation) kann via Funk, WLAN, Bluetooth, einen gängigen Mobilfunkstandard etc. ein Triggersignal in Echtzeit oder mit einem vordefinierten Zeitversatz, z.B. einige Mikro- oder Millisekunden voraus, aussenden. Das Signal wird seitens der Reflektoranordnung erfasst und zum Zweck der synchronisierten Bilderfassung, insbesondere unter Berücksichtigung des Zeitversatzes, verarbeitet.
- Interne Uhren sowohl des Vermessungsgeräts als auch der Reflektoranordnung werden vorab synchronisiert. Eine Synchronität zwischen Bilderfassung und Lichtemission kann so anhand der jeweiligen Zeit bestimmt werden. Der Sensor kann dann anhand dieser Information entsprechend angesteuert werden. Mittels einem hardware-unterstützte NTP (Network Time Protocol) kann eine sehr genaue Synchronisation erzielt werden.
- Alternativ kann der Sensor asynchron laufen, d.h. Bilder können z.B. mit einer grösseren Framerate erfasst werden, als ein Ein- und Ausschalten des Lasers erfolgt. Die Synchronisation kann dann anhand der Bilder bestimmt werden. Hierbei ist die Frequenz bekannt, jedoch muss die Phase berechnet werden, z.B. mittels "IQ Demodulation" (Bestimmung einer zeitlichen Korrelation durch sin() und cos()) für jeden Pixel oder für Gruppen von Pixeln.
- Alternativ schaltet der Laser entweder bei jedem Bild (z.B. Ein- und Ausschaltzyklus mit 50 Hz und synchrone Bilderfassung mit 100 Hz) oder der Laser schaltet langsamer (z.B. mit 10 Hz) und es werden mehrere Bilder pro Ein- bzw. Ausschaltphase erfasst.

In Zusammenhang mit der Bilderfassung können mehrere erfasste Bilder gemittelt werden, um ein Rauschen in der Bildinformation zu reduzieren.

Der Bildsensor kann insbesondere im gebinnten Modus (mehrere Pixel werden analog summiert bzw. gemittelt und mit einer höheren Framerate ausgelesen) betrieben werden. Dies reduziert Rauschen in zweierlei Hinsicht: örtlich (weniger rauschen pro Pixel in gebinnten Modus) und zeitlich durch die grössere Framerate.

In einer Ausführungsform kann gezielt nur ein Teilbereich (Region of Interest) des Bildsensors ausgelesen werden, um CPU-Leistung und Akku-Leistung einzusparen und/oder die Framerate zu erhöhen. Die Lage des Teilbereichs auf dem Sensor wird insbesondere in Echtzeit angepasst (z.B. mittels einer lokal aufgelösten Intensitätsüberwachung oder mittels Bildverarbeitung), um die Erfassung des Laserspots auf dem Sensor fortlaufend bereitzustellen.

Bei Empfangen eines Messsignals kann das Empfangen dem Vermessungsgerät über eine Kommunikationsverbindung bestätigt und dabei eine Identifikationsinformation für das angezielte Ziel übertragen werden (Target ID). Dieses ist vorteilhaft, wenn sich im Bereich des Vermessungsgerätes mehrere 360°-Prismen oder Reflektoranordnungen befinden, um eine evtl. Fehlmessung auf eine andere Reflektoranordnung zu vermeiden.

Auch kann das Aussenden eines scannenden Suchstrahls des Vermessungsgerätes zum schnellen Auffinden von Retroreflektoren im Messraum mittels der Reflektoranordnung bestätigt werden, sobald die emittierte Suchstrahlung (z.B. fächerförmig) in der Reflektoranordnung durch den Detektor erfasst wird.

Die Reflektoranordnung kann so neben der Orientierungsbestimmung auch zum Suchen und Auffinden (Power Search) eingesetzt werden. Zudem kann die Reflektoranordung die Übermittlung einer Selbstidentifikation bereitstellen (Target ID)

Bezüglich der Ausgestaltung der optischen Baugruppe kann gemäss einer Ausführung die erste optische Baugruppe eine Mehrzahl, insbesondere zwei, sphärische Linsen und/oder eine optische Komponente mit einer asphärischen Oberfläche aufweisen, insbesondere wobei die sphärischen Linsen und/oder optische Komponente aus Glas oder Kunststoff gefertigt sind. Durch die Verwendung von Glas kann im Unterschied zu vielen anderen Materialien ein vergleichsweise grosser Brechungsindex, insbesondere von grösser 2, erreicht werden.

In einer Ausführungsform kann die Reflektoranordnung ein optisches Kopplungselement zwischen dem Retroreflektor und der optischen Baugruppe aufweisen.

Das optische Kopplungselement kann den Retroreflektor und/oder die optische Baugruppe kontaktieren.

Ein Zusammenwirken des optischen Kopplungselements mit dem Retroreflektor und der optischen Baugruppe stellt eine vergrösserte Lichtbrechkraft der Reflektoranordnung bereit.

Dem Sensor kann zudem ein Filter vorgeordnet sein. Dieses Filter kann derart wellenlängenselektiv ausgebildet und angepasst sein, dass Messstrahlung eines geodätischen Vermessungsgeräts den Sensor erreicht, störende Umgebungsstrahlung oder Störreflexe jedoch herausgefiltert werden. Das Filter kann beispielsweise Teil der optischen Baugruppe sein.

Insbesondere kann das optische Kopplungselement als anamorphotisches Kopplungselement ausgebildet sein, insbesondere wodurch in unterschiedliche Richtungen orthogonal zu einer optischen Achse des Kopplungselements unterschiedliche Brechkräfte bereitgestellt werden und das optische System z.B. in horizontaler und vertikaler Richtung unterschiedliche Brechkraft aufweist. Das anamorphotische Kopplungselement stellt hierdurch eine Brechkraft in eine erste Richtung bereit, die von einer Brechkraft in eine zweite Richtung unterschiedlich ist. Hierdurch ergibt sich ein zusätzlicher Freiheitsgrad in der Ausgestaltung des optischen Systems. So kann z.B. ein elevatives Sichtfeld erzeugt werden, das entsprechend unterschiedlich (gross) relativ zu einem azimutalen Sichtfeld ist. Das Gesamtsichtfeld kann somit in vorteilhafter Weise in Verbindung mit den Fischaugeneigenschaften des Systems angepasst werden.

In einer Ausführung kann die Durchtrittsfläche mit einem definierten Winkel schräg zur optischen Achse der Baugruppe ausgerichtet sein. In einer Ausführungsform, bei der zwischen Kopplungselement und Prisma ein Luftspalt besteht, kann dies besonders vorteilhaft sein. Durch Anpassung des Winkels kann Totalreflexion vermieden oder auf einen kleineren Bereich reduziert werden.

Gemäss einer Ausführungsform der Erfindung kann der Retroreflektor als Prisma, insbesondere Tripelprisma, insbesondere verspiegelt, ausgebildet sein. Das Prisma kann eine ein Dreieck bildende Lichteintrittsfläche und die der Lichteintrittsfläche gegenüberliegende Durchtrittsfläche als Apertur aufweisen. Ein Teil von in das Prisma eintretender Strahlung kann das Prisma an dessen Rückseite durch die Durchtrittsfläche unreflektiert verlassen.

Die Durchtrittsfläche kann an einer Ecke des Prismas gebildet sein, insbesondere wobei die Durchtrittsfläche durch einen ausgesparten Abschluss einer Prismenecke (z.B. abgetrennte Ecke) des Prismas gebildet ist und ebenfalls ein Dreieck definiert. Die durch die erste optische Baugruppe definierte optische Achse kann parallel zur Durchtrittsfläche verlaufen.

In einer Ausführungsform ist die Reflektoranordnung als 360°-Retroreflektor aufgebaut, mit einer Mehrzahl, insbesondere mit sechs, aneinander angrenzend angeordneten und als Prismen ausgebildeten Retroreflektoren, die gemäss einer obigen Ausführung ausgeführt sind. Die Mehrzahl der Prismen sind ringförmig angeordnet, bilden insbesondere einen Ring, und der 360°-Retroreflektor definiert ein azimutales Gesamtsichtfeld von 360°.

Eine durch die ringförmige Anordnung der Prismen definierte Zentralachse (z.B. Mittelsenkrechte der durch Projektion der Prismen auf eine Ebene eingeschlossenen Fläche) verläuft parallel oder koaxial zur optischen Achse der ersten optischen Baugruppe.

In einer Ausführung können die optischen Achsen zumindest zweier, insbesondere dreier, Prismen einen gemeinsamen Schnittpunkt mit der Zentralachse aufweisen, wobei die Lage einer optischen Achse eines Prismas durch die jeweiligen Mittelpunkte von dessen Lichteintrittsfläche und von dessen Durchtrittsfläche definiert ist.

Gemäss einer bestimmten Ausführungsform kann die Reflektoranordnung eine zweite Sensoranordnung mit einer zweiten optischen Baugruppe und einem zweiten Sensor aufweisen, wobei die erste Sensoranordnung einer ersten Prismengruppe und die zweite Sensoranordnung einer zweiten Prismengruppe zugeordnet ist, insbesondere wobei die erste und die zweite Prismengruppe jeweils drei Prismen aufweist.

Insbesondere können die erste Prismengruppe und die erste Sensoranordnung eine Erfassung der durch die erste Prismengruppe bereitstellbaren und mittels der ersten optischen Baugruppe auf den ersten Sensor projizierbaren Orientierungsmessstrahlung durch den ersten Sensor bereitstellen. Die zweite Prismengruppe und die zweite Sensoranordnung können eine Erfassung der durch die zweite Prismengruppe bereitstellbaren und mittels der zweiten optischen Baugruppe auf den zweiten Sensor projizierbaren Orientierungsmessstrahlung durch den zweiten Sensor bereitstellen.

Die optische Achse der ersten und die optische Achse der zweiten Sensoranordnung können in einer Ausführung (relativ zueinander) parallel oder koaxial ausgerichtet sein, wobei die jeweiligen Erfassungsrichtungen der ersten und der zweiten Sensoranordnung entgegengesetzt sind.

In einer Ausführung können die Mittelpunkte der Durchtrittsflächen der Prismen der ersten Prismengruppe in einer ersten Ebene und die Mittelpunkte der Durchtrittsflächen der Prismen der zweiten Prismengruppe in einer zweiten Ebene liegen, wobei die erste Ebene und die zweite Ebene parallel zueinander ausgerichtet sind und einen bestimmten Abstand aufweisen, insbesondere wobei die Ebenen im Wesentlichen orthogonal zu der durch die erste optische Baugruppe definierten optischen Achse liegen.

Die Prismen einer jeweiligen Prismengruppe sind mit Bezug zu einer Position auf der Zentralachse versetzt zu den Prismen einer jeweiligen anderen Prismengruppe angeordnet.

Gemäss einer Ausführung kann die Reflektoranordnung ein Gesamtsichtfeld mit einem elevativen Erfassungswinkel, d.h. Gesamtöffnungswinkel des Sichtfeldes in Elevationsrichtung, von mindestens 30° und bis zu 60° und einem azimutalen Erfassungswinkel von 360° aufweisen.

Die Erfindung betrifft ferner ein Messhilfsinstrument, insbesondere Lotstab, Vermessungsstab oder Tastwerkzeug, mit einer Reflektoranordnung nach einer oben beschriebenen Ausführung. Das Messhilfsinstrument ist zur kontaktlosen oder taktilen Erfassung eines Zielpunkts an einem Objekt mit definiertem Positionsbezug zu der Reflektoranordnung ausgebildet. Mittels der Reflektoranordnung kann die Position und Orientierung des Messhilfsinstruments in bis zu sechs Freiheitsgraden eindeutig bestimmt werden. Die Reflektoranordnung wird dabei insbesondere zur Bestimmung des Azimuts relativ zur Sichtlinie zwischen Vermessungsgerät und Messhilfsinstrument eingesetzt.

Durch die Vorsehung eines Sensors am Messstab und die Erfassung von charakteristischer Messstrahlung einer Totalstation etc. kann der Messstab als aktives Hilfsmittel ausgebildet sein. Hierzu kann der Messstab eine Sendeeinheit aufweisen und zur Übermittlung von Information ausgebildet sein. Z.B. kann der Messstab ein Signal auf Antwort einer Detektion eines Suchstrahls erzeugen und der Totalstation dadurch mitteilen, dass die Strahlung dann den Reflektor trifft (Suchvorgang zum Auffinden eines geodätischen Ziels). Zudem kann eine ID für das bestimmte Ziel übertragen werden und damit angezeigt werden, welches Ziel gefunden wurde oder aktuell angezielt wird.

In anderer Richtung kann auch Information zum Messstab übertragen werden. Hierfür wird seitens des Stabes kein zusätzlicher Empfänger benötigt, sondern die Information kann mittels modulierter elektromagnetischer Strahlung transportiert und mit dem Sensor erfasst werden.

Ferner kann der Sensor in der Reflektoranordnung auch zur allgemeinen Bilderfassung, neben der Erfassung der Messstrahlung, ausgebildet sein. Die Erfassung und Auswertung von Umgebungsbildern kann z.B. zur Orts- und Lagebestimmung des Messstabes beitragen.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein geodätisches Vermessungssystem mit einer erfindungsgemässen Reflektoranordnung;
- Fig. 2: eine Ausführungsform für eine erfindungsgemässe Reflektoranordnung im Querschnitt;
- Fig. 3: ein durch eine erfindungsgemässe Reflektoranordnung bereitstellbares Sichtfeld;
- Fig. 4: eine optische Baugruppe einer erfindungsgemässen Reflektoranordnung; und
- Fig. 5a-c: Ausführungen eines erfindungsgemässen Kopplungselements.

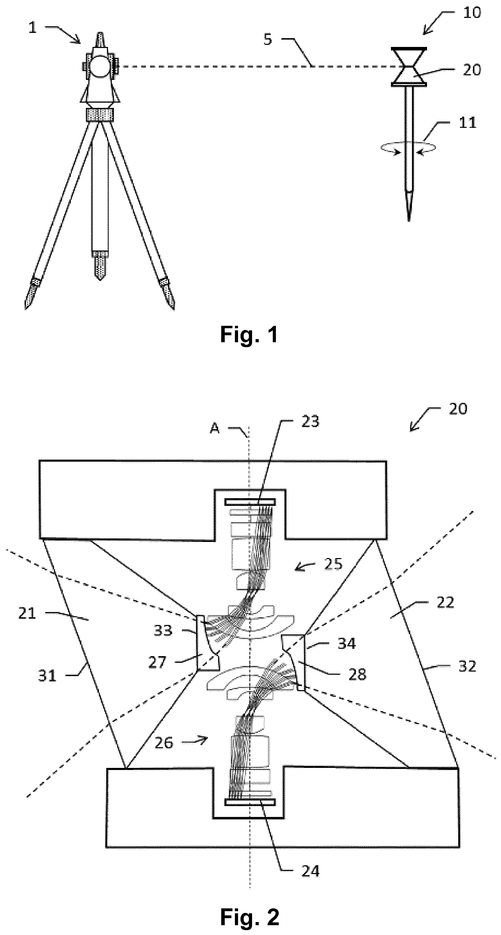

Figur 1 zeigt ein Vermessungsgerät 1, insbesondere ausgestaltet als Totalstation oder Multistation, mit einer Basis, einer Stütze, die um eine Schwenkachse relativ zur Basis schwenkbar ist, und eine um zwei Achsen - Schwenk- und Kippachse - schwenkbaren Anzieleinheit. Ein Messlaserstrahl 5 wird aus der Anzieleinheit emittiert und trifft eine erfindungsgemässe Reflektoranordnung 20 eines als Lotstab 10 ausgebildeten Messhilfsinstrument. Als Messstrahlung 5 wird typischerweise (kollimierte) Laserstrahlung, die durch eine an dem Vermessungsgerät 1 vorgesehene Laserdiode erzeugbar ist, verwendet. Die Reflektoranordnung 20 verfügt über einen Retroreflektor und eine Sensoranordnung.

Für eine Entfernungsmessung wird die Messstrahlung 5 durch den Retroreflektor parallel zurückreflektiert, seitens des Vermessungsgeräts 1 erfasst und hinsichtlich einer Distanzinformation ausgewertet, beispielsweise mittels einer Laufzeitmessung. Die Lage des Messhilfsinstruments 10 kann anhand der Bestimmung der Winkelstellung der Anzieleinheit, also der Emissionsrichtung des Lasers 5, ermittelt werden.

Zur Orientierungsbestimmung des Messhilfsinstruments 10, zumindest bezüglich eines rotatorischen Freiheitsgrads 11, insbesondere Gieren (engl.: yaw), tritt erfindungsgemäss ein auf die Reflektoranordnung 20 auftreffender und nichtreflektierter Teil der Strahlung 5 durch den Retroreflektor hindurch und wird mittels einer Fischaugenoptik auf einen optisch nachgeordneten Sensor, insbesondere Bildsensor, geleitet. Anhand einer Auftreffposition des durchtretenden Strahlungsteils auf dem Sensor kann ein Richtungswinkel für den mindestens einen Freiheitsgrad bezüglich der Emissionsrichtung der Messstrahlung 5 bestimmt werden. Während einer Vermessung sind räumliche Position und Orientierung des Vermessungsgeräts 1 typischerweise bekannt. So kann eine absolute Orientierung des Messstabs 10 im Raum, d.h. im dem Koordinatensystem, in dem das Vermessungsgerät 1 eingemessen ist, bestimmt werden.

Figur 2 zeigt eine erfindungsgemässe Reflektoranordnung 20 im Längsquerschnitt durch deren Zentrum.

Die Reflektoranordnung 20 ist als 360°-Retroreflektor ausgestaltet und stellt damit eine Rückreflexion von Messstrahlung über einen azimutalen Winkelbereich von 360° bereit. Die Reflektoranordnung 20 weist sechs einzelne Tripelprismen auf, die durch deren relative, ringartige Anordnung den Gesamtreflexionsbereich von 360° ergeben. In Figur 2 sind stellvertretend zwei gegenüberliegende Prismen 21 und 22 der insgesamt sechs Prismen ebenfalls im Querschnitt gezeigt.

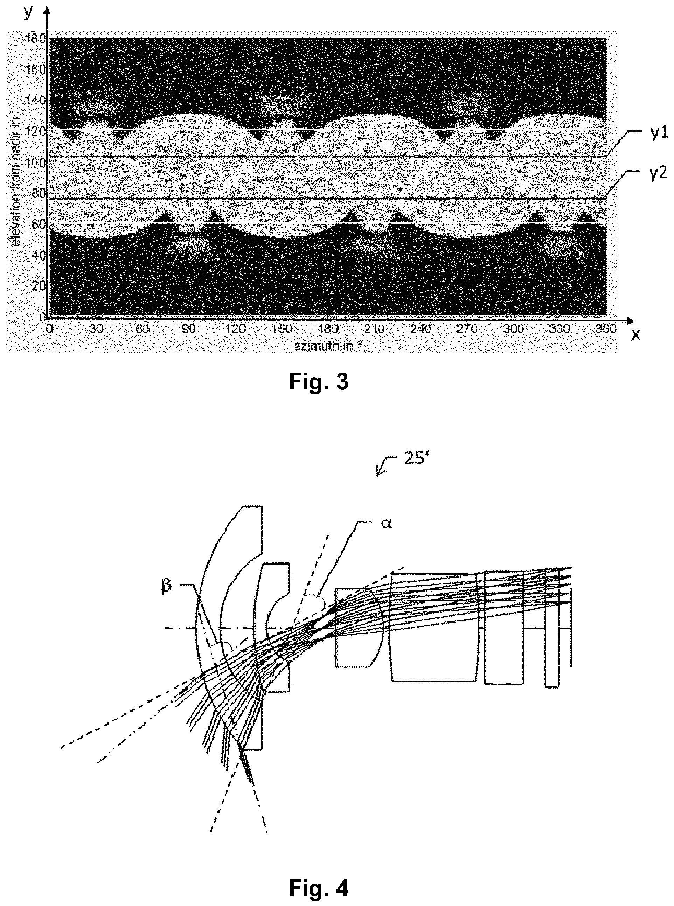

Die Reflektoranordnung 20 weist zudem zwei Sensoren 23 und 24 sowie zwei optische Baugruppen 25 und 26 auf. Die optischen Baugruppen 25,26 sind jeweils so aufgebaut, dass diese ein jeweiliges Fischaugenobjektiv, mit den für ein solches Objektiv spezifischen Abbildungseigenschaften, bereitstellen. Eine detaillierte Darstellung einer solchen Baugruppe ist in Figur 4 zu finden.

Die Prismen 21,22 weisen an deren nach Aussen gewandten Endseiten jeweilige Lichteintrittsflächen 31,32 und jeweilige gegenüberliegende, in Richtung des Zentrums der Anordnung weisende, Durchtrittsflächen 33,34 auf. Zur Ausbildung einer solchen Lichtdurchtrittsfläche 33,34 kann bei einem Dreiecksprisma 21,22 beispielsweise die Tripelecke auf der optischen Achse entfernt (z.B. abgetrennt, abgeschliffen, abpoliert) sein.

Zudem sind optische Kopplungselemente 27 und 28 zwischen den Prismen 21,22 und den optischen Baugruppen 25,26 angeordnet. Ein Kopplungselement 27,28 kann dabei direkt an einem Prisma 21,22 angebracht sein (z.B. aufgeklebt) oder mit einer definierten Lücke relativ zu dem Prisma platziert sein. Mittels Anordnung dieser Kopplungselemente 27,28 kann eine Vergrösserung der Gesamtbrechkraft des Systems (Kopplungselement und optische Baugruppe) erreicht werden, wodurch eine Optimierung des Sichtfeldes insbesondere hinsichtlich Vermeidung von Sichtunterbrechungen bezüglich des azimutalen und/oder elevativen Sichtwinkels bereitgestellt ist.

Die Kopplungselemente 27,28 sind vorzugsweise aus Cycloolefin-Copolymer (COC) oder Polycarbonat (PC) gefertigt, können aber auch aus Glas z.B. durch 3D-Druck hergestellt sein.

Ein aus der gezeigten Anordnung resultierendes Gesamtsichtfeld, d.h. über einen azimutalen Winkelbereich von 360°, stellt durchgehend einen Blickwinkel (Elevation) von mindestens ± 30° in Elevationsrichtung (orthogonal zum Azimut; gesamter Öffnungswinkel von mindestens 60°, bezogen auf die Horizontalebene) bereit.

Insbesondere kann gemäss einer bestimmten Ausführungsform zumindest im Wesentlichen durchgehend eine Elevation von ± 15° abgebildet werden (bezogen auf die Horizontalebene).

Diese Reflektoranordnung 20 eines 360° Reflektors weist als einen Vorteil auf, dass die optische Achse des Sensors durch die Lichtbrechung mittels einer spezifischen optischen Baugruppe und eines angepassten Kopplungselements im Wesentlichen koaxial mit den Prismen ist. Damit kann die Messstrahlung der Distanzmesseinheit einer Totalstation gleichzeitig zur Orientierungsbestimmung der Reflektoranordnung 20 oder eines diese Anordnung tragenden Pols verwendet werden. Zudem ist die Sensoranordnung voll in den Reflektor integriert und von aussen nicht sichtbar. Die Reflektoranordnung 20 ist damit sehr kompakt ausgeführt. Ein weiterer Vorteil ist die hierdurch gegebene sehr gute Isolation gegen Umwelteinflüsse (z.B. Feuchtigkeit, Staub) von aussen. Die Gesamtgewichtszunehme der Anordnung bleibt durch die Vorsehung der integrierten Komponenten vergleichsweise gering.

Wie in Figur 2 gezeigt sind jeweils gegenüberliegende Prismen 21,22 zum einen bezüglich deren Positionierung entlang der Zentralachse A versetzt und zum zweiten ist der Winkel zwischen der Durchtrittsfläche 33 und der Eintrittsfläche 31 des ersten Prismas 21 und der Durchtrittsfläche 34 und der Eintrittsfläche 32 des zweiten Prismas 22 betragsmässig vorzugsweise identisch, bezüglich der Richtung jedoch entgegengesetzt. Im gezeigten Ausführungsbeispiel sind jeweils benachbarte Prismen entsprechend unterschiedlich ausgerichtet.

Aufgrund dieser versetzten Anordnung - drei nach oben geneigte und drei nach unten geneigte Prismen - ist jeweils eine Kombination aus optischer Baugruppe und Sensor den drei nach oben geneigt und den drei nach unten geneigt Prismen zugeordnet.

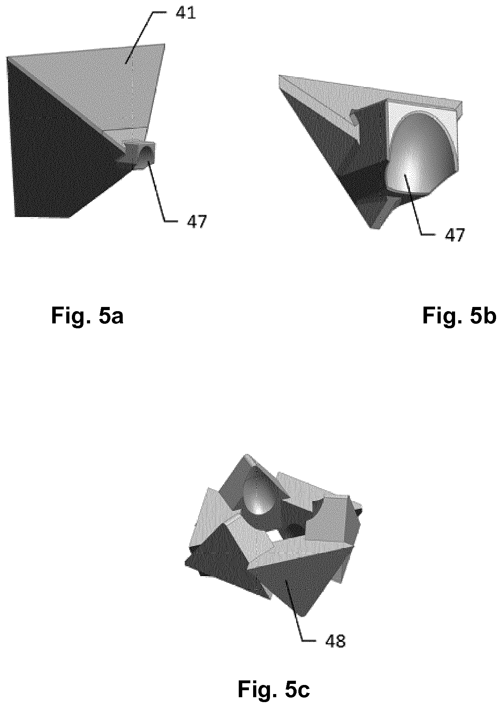

Jeder der beiden Sensoren 23,24 ist zur Erfassung von Licht aus jeweils drei Prismen angeordnet und eingerichtet. Jedem Prisma ist ein Kopplungselement zugeordnet, wobei die Kopplungselemente in einer integrierten Bauweise als einteiliges Bauteil zusammengefasst sein können (vgl. Figur 5c) .

Durch die Fischaugencharakteristik der optischen Baugruppen 25,26 stellt jede dieser Baugruppen eine für den gewünschten Erfassungswinkelbereich geeignete Abbildungseigenschaft bereit. Jedes Fischaugenobjektiv bildet die in einem definierten Objektivsichtfeld einfallende Strahlung auf den zugeordneten Sensor ab. Jede optische Baugruppe schafft im gezeigten Beispiel die gewünschte Abbildung von Strahlung aus drei bezüglich der Zentralachse A gleichgeneigten Prismen der insgesamt sechs Prismen auf den jeweiligen Sensor.

Figur 3 zeigt eine räumliche Abdeckung des Sichtfeldes mit einer Reflektoranordnung 20 nach einer erfindungsgemässen Ausführungsform. Der jeweils erfassbare Elevationswinkel ist in y-Richtung über den in x-Richtung abbildbaren Azimut (0° - 360°) aufgetragen. Das über den gesamten Azimutbereich von 0° - 360° erfassbare elevative Sichtfeld von ± 15° (hier bezüglich 90° Azimut (Horizontalebene)) ist durch zwei Linien y1 und y2 verdeutlicht. Jeder der kreissektorförmigen Bereiche repräsentiert das Sichtfeld eines Prismas in Kombination mit einem diesem Prisma zugeordneten Kopplungselement und einer entsprechend zugeordneten optischen Baugruppe. Ein Zusammenwirken von sechs solchen Kombinationen stellt die durchgehende Erfassbarkeit bezüglich des Azimut bereit.

In einer alternativen Ausführungsform (nicht gezeigt) kann eine 360°-Abdeckung bereits mit einer Anordnung von vier kombinierten Sätzen aus Prisma und zugeordnetem Kopplungselement bereitgestellt werden.

Es versteht sich, dass in einer weiteren alternativen Ausführungsform (nicht gezeigt) ein einzelnes Prisma in Kombination mit einer einzelnen optischen Baugruppe und einem einzelnen Sensor vorgesehen sein kann. Das Sichtfeld ist hier entsprechend auf die geometrische und optische Ausgestaltung insbesondere des verwendeten Prismas beschränkt. Hierdurch sind jedoch die Vorteile bezügliche eines bereitgestellten grossen Sichtfeldes auf einen Einzelreflektor übertragbar, wobei eine vorteilhafte Anordnung von optischer Baugruppe und Sensor zu einer kompakten und flexiblen Ausgestaltung beitragen kann.

Die Sensoren 23,24 können beispielsweise als Bildsensoren (CCD oder CMOS) oder als bezüglich der Wellenlänge der Messstrahlung sensitive, positionsauflösende Detektoren ausgebildet sein.

Die Reflektoranordnung 20 stellt eine Bestimmung der räumlichen Orientierung insbesondere bezüglich einer Gierbewegung, d.h. einer Rotation der Reflektoranordnung 20 um die zentrale Achse A, bereit. Die beiden anderen rotatorischen Freiheitsgrade, Roll- und Nickwinkel, können z.B. mittels Gravitationsneigungsmesser oder (teilweise) ebenfalls anhand der Reflektoranordnung 20 bestimmt werden. Zur Bestimmung der Orientierung in allen drei Rotationsfreiheitsgraden werden die hierzu erfassten Messdaten vorzugsweise gemeinsam verarbeitet. Werden z.B. Roll- und Nicklage mittels eines Neigungssensors bestimmt, kann die azimutale Orientierung des Messstabes zur Totalstation eindeutig berechnet werden.

Die Messung des Gierens (yaw) ist gerätefest, d.h. die Messung erfolgt relativ zu der Poleachse. Ein Neigungssensor (Inklinometer) misst relativ zur Gravitation. Wenn ein Messstab also zumindest im Wesentlichen vertikal steht, erfolgt ein Gieren entsprechend parallel zum Azimut, und alle drei Raumwinkel können einfach bestimmt werden. Je grösser die Abweichung der Lage des Messstabs von einer vertikalen Ausrichtung wird, desto geringer wird die resultierende Messgenauigkeit, jedoch erlaubt das erfindungsgemässe System eine zuverlässige vollständige räumliche Orientierungsbestimmung (mit zusätzlichem Neigungssensor) zumindest bis zu einer Neigung des Messstabes von 70° oder 80°.

Die 360° Umgebung der Reflektoranordnung 20 wird verzeichnet als ein Ringelement auf dem Sensor abgebildet, wobei das Zentrum des Rings als Koordinatenursprung eines Polardiagramms betrachtet werden kann. Aus der Winkelposition des abgebildeten Messstrahls 5 lässt sich der Gierwinkel bestimmen. Die radiale Lage ist durch den Nickwinkel bestimmt, der auch aus dieser bestimmt werden kann.

Ist die Messstrahlung 5 polarisiert, kann bei Verwendung eines polarisationsauflösenden Bildsensors (z.B. Sony IMX250MZR) z.B. aus der Berechnung des Stokes-Vektors über vier benachbarte Polarisationspixel mit unterschiedlichen polarisationssensitiven Matrixelementen, auch der dritte Freiheitsgrad, der Rollwinkel des Messstabes, rein über die optische Detektion der Messstrahlung 5 bestimmt werden. Eine solche Ausführungsform ist besonders vorteilhaft, da alle drei rotatorischen Freiheitsgrade allein auf Basis der optischen Messdaten bestimmt werden können.

In anderen Worten kann zumindest der erste Sensor als polarisationsauflösender Sensor ausgebildet sein, wobei benachbarten Sensorpixeln unterschiedlich polarisationssensitive Matrixelemente zugeordnet sind und der Sensor eine Berechnung des Stokes-Vektor anhand einer Intensitätsauswertung der benachbarten Sensorpixel bereitstellt.

Die Orientierungsbestimmung mit der Reflektoranordnung 20 erfolgt anhand und relativ zur Ausbreitungsachse der auf die Anordnung 20 auftreffenden Messstrahlung, z.B. emittiert seitens einer Totalstation. Die Messstrahlung tritt dann teilweise durch eines der Prismen hindurch, wird durch das Kopplungselement und mittels der optischen Baugruppe auf den Sensor umgelenkt und fokussiert.

Der Sensor ist dazu ausgebildet bzw. wird derart angesteuert/ausgelesen, dass für die auftreffende Messstrahlung eine Auftreffposition auf der Detektionsfläche des Sensors bestimmbar ist. Dies kann beispielsweise mittels einer Schwerpunktbestimmung für die auftreffende Strahlung erfolgen. Hierzu kann (insbesondere abhängig vom Sensortyp) z.B. eine Intensitätsbetrachtung über die Sensorfläche durchgeführt werden. Alternativ oder zusätzlich kann ein durch den Sensor erzeugbares Bild, das die auftreffende Strahlung abgebildet umfasst, mittels Bildverarbeitung ausgewertet werden. Hierbei können z.B. Helligkeits- oder Kontrastauswertungen angewendet werden, um die Auftreffposition abzuleiten.

Neben dem Signal der Messstrahlung 5 kann auch das ringförmige Hintergrundbild der Umgebung der Reflektoranordung zur Positionsbestimmung und Registrierung z.B. beim Versetzten des Messstabes mit ungewollter Messstrahlunterbrechung genutzt werden oder auch um die Umgebung zu Kartieren (SLAM).

Ebenfalls ist die Unterstützung durch Inertialsensoren (IMU) möglich, um die Messstabilität im Fall einer Messstrahlunterbrechung weiter zu erhöhen.

Aufgrund der Ausgestaltung der Reflektoranordnung 20 korreliert die Auftreffposition auf dem Sensor mit dem Einfallswinkel der Strahlung in das Prisma. Der Azimut der Reflektoranordnung 20 bezüglich der Ausbreitungsachse der Messstrahlung kann damit anhand der bestimmten Auftreffposition abgeleitet werden.

Wird die Reflektoranordnung 20 bei einfallender Messstrahlung um die Achse A rotiert, verändert sich die Auftreffposition der Strahlung auf dem Sensor. Insbesondere beschreibt die Veränderung der Auftreffposition dabei einen Kreisbogen auf dem Sensor. Verlässt die Messstrahlung dabei das Sichtfeld eines Prismas und tritt in das Sichtfeld eines benachbarten Prismas ein, so trifft die Messstrahlung nicht länger auf den bisherigen Sensor, sondern wird auf den gegenüberliegenden Sensor gelenkt. Bei weiter Rotation wird auch hier ein Kreisbogen auf der Detektionsfläche beschrieben.

Erfindungsgemäss kann die Auswertung der Orientierung alternativ nicht nur allein anhand eines Bildes erfolgen, sondern es kann ein fortlaufendes Monitoring (Überwachung) der Auftreffposition erfolgen und durch eine jeweilige Veränderung der Auftreffposition (ebenfalls fortlaufend) auf eine Orientierung rückgeschlossen werden.

Da jedem der Sensoren 23 und 24 die Strahlung von jeweils drei Prismen zugeführt wird und diese Prismen azimutal versetzt sind (z.B. um jeweils 60°) erfassen die Sensoren die Strahlung insbesondere auf jeweils drei Sektoren auf deren Detektionsflächen.

Figur 4 zeigt eine Ausführungsform für einen Aufbau einer erfindungsgemäss eingesetzten optischen Baugruppe 25'. Die Baugruppe 25' weist vier Linsen und einen Bandpassfilter auf. Die Linsen sind zur Bereitstellung eines grossen Brechungsindex vorzugsweise aus Glas gefertigt. Die asphärisch geformten Linsen sind insbesondere mittels Präzisionsguss gefertigt.

Die Baugruppe 25' weist in einer bestimmten Ausführungsform mindestens zwei Linsen und einen Bandpassfilter auf. Mindestens die erste, insbesondere die beiden in Lichteinfallsrichtung ersten Linsen, ist zur Bereitstellung eines hohen Brechungsindex von beispielweise grösser als 1.7 vorzugsweise aus Glas gefertigt. Die Linse, insbesondere die beiden ersten Linsen, hat eine negative Brechkraft und ist meniskusförmig gekrümmt. Danach folgt eine Aperturblende. Eventuell nach der Aperturblende angeordnete Linsen können eine positive Brechkraft aufweisen.

Die Kopplungselemente können hierbei durch deren Anamorphotismus astigmatische Aberrationen erzeugen. Die optische Baugruppe kann dann so konstruiert sein, dass der durch die Kopplungselemente erzeugte Astigmatismus teilweise kompensiert wird, so dass die Orientierungsmessstrahlung auf dem Detektionselement auf einen möglichst kleinen Fleck fokussiert wird. Die Fokussierung auf einen möglichst kleinen Fleck ermöglicht eine gute Unterscheidung der fokussierten Orientierungsmessstrahlung von allfälligem Störlicht, das z.B. von hell beleuchteten Gebäuden ausgehen kann.

Beispielhaft sind die Strahlengänge durch die optische Baugruppe 25' innerhalb eines geometrischen Winkelbereich α in Bezug zur ersten Linse gezeigt. Im Vergleich ist der optische Strahlengang von in diesem Bereich α eintretender Strahlung und der hierdurch bereitgestellte Sichtbereich β gezeigt. Das Verhältnis α : β kann erfindungsgemäss mindestens 1 : 1.5 oder 1 : 2 betragen.

Figur 5a zeigt eine Kombination eines Prismas 41 mit einem Kopplungselement 47 einer erfindungsgemässen Reflektoranordnung. Figur 5b zeigt das Kopplungselement 47 in einer vergrösserten, perspektivischen Darstellung. Das Kopplungselement 47 ist z.B. aus Glas oder Cycloolefin-Copolymer (COC) oder Polycarbonat (PC) gefertigt und zur Manipulation der Strahldurchtrittsrichtung von Messstrahlung ausgelegt, die von einem geodätischen Vermessungsgerät emittierbar ist. Das Kopplungselement 47 trägt hierdurch zu einer gewünschten Vergrösserung der optischen Brechkraft einer Reflektoranordnung bei.

Das Kopplungselement 47 ist an eine auf der optischen Achse des Prismas 41 liegenden, abgetrennten Ecke des Prismas kontaktiert. Das Kopplungselement 47 kann beispielsweise aufgeklebt sein. Messstrahlung, die durch das Prisma 41 nicht reflektiert wird, d.h. Messstrahlung die auf die durch die ausgesparte Ecke des Prismas gebildete Durchtrittsfläche trifft, verlässt das Prisma an dessen Rückseite und wird durch das Kopplungselement 47 umgelenkt.

Figur 5c zeigt eine weitere Ausführungsform des Kopplungselements 48. Hierbei handelt es sich um eine integrierte Kombination aus sechs Einzelelementen. Das Kopplungselement 48 ist insbesondere zur Verwendung in einer Reflektoranordnung 20 nach Figur 2 vorgesehen und ist gleichzeitig mit sechs Prismen verbindbar. Die durch diese Prismen (wahlweise oder gleichzeitig) tretende Strahlung wird hierdurch jeweils in gewünschter Weise umgelenkt und insbesondere auf eine nachgeordnete optische Baugruppe projiziert.

Moderne Fertigungsmethoden erlauben auch die direkte Integration der Kopplerfunktion in das Design des Prismas über die Herstellung von Freiformflächen. Auf diese Weise wird ein zusätzliches Bauteil erspart und Temperatureffekte an unterschiedlichen Materialschnittstellen vermieden. Das Kopplungselement 48 kann somit als integrierter Bestandteil des Prismas, insbesondere einstückig mit dem Prisma, ausgebildet sein.

Es versteht sich, dass diese dargestellten Figuren nur mögliche Ausführungsbeispiele schematisch darstellen. Die verschiedenen Ansätze können erfindungsgemäss ebenso miteinander sowie mit geodätischen Vermessungssystemen des Stands der Technik kombiniert werden.

## Patentansprüche

1. Reflektoranordnung (20), insbesondere für die industrielle bzw. geodätische Vermessung, mit
• einem Retroreflektor (21,22,41), der eine Durchtrittsfläche (33,34) für zumindest einen Teil von in den Retroreflektor (21,22,41) eintretender Messstrahlung als Orientierungsmessstrahlung bereitstellt,
• einer einen ersten Sensor (23,24) aufweisenden ersten Sensoranordnung, mittels welcher die durch den Retroreflektor (21,22,41) durchtretende Orientierungsmessstrahlung erfassbar ist,
**dadurch gekennzeichnet, dass**
die erste Sensoranordnung eine ein Fischaugenobjektiv bereitstellende erste optische Baugruppe (25,25',26) aufweist,
wobei der Retroreflektor (21,22,41) und die erste Sensoranordnung derart angeordnet sind, dass durch den Retroreflektor (21,22,41) durchtretende Orientierungsmessstrahlung mittels der ersten optischen Baugruppe (25,25',26) auf die Detektionsfläche des ersten Sensors (23,24) umlenkbar und insbesondere fokussierbar ist.

2. Reflektoranordnung (20) nach Anspruch 1,
**dadurch gekennzeichnet, dass**
• die erste optische Baugruppe (25,25',26) ein Sichtfeld mit
□ einem elevativen Erfassungswinkel von bis zu 130° bezüglich der optischen Achse und
□ einem azimutalen Erfassungswinkel von 360° definiert und
• die Detektionsfläche des ersten Sensors (23,24) derart angeordnet ist, dass das Sichtfeld der optischen Baugruppe (25,25',26) auf die Detektionsfläche abbildbar ist.
und/oder
die Reflektoranordnung (20) ein Gesamtsichtfeld mit
• einem elevativen Erfassungswinkel von mindestens 30° und bis zu 60° und
• einem azimutalen Erfassungswinkel von 360° aufweist.

3. Reflektoranordnung (20) nach Anspruch 1 oder 2,
**dadurch gekennzeichnet, dass**
der erste Sensor (23,24)
• zur Bestimmung einer Auftreffposition der Orientierungsmessstrahlung auf der Detektionsfläche ausgestaltet ist, insbesondere zur Bestimmung eines Schwerpunkts der Auftreffposition, und/oder
• zur Bilderfassung ausgebildet ist und die Auftreffposition der Orientierungsmessstrahlung in einem Bild erfassbar ist.

4. Reflektoranordnung (20) nach Anspruch 3,
**dadurch gekennzeichnet, dass**
die Reflektoranordnung (20) eine Auswerteeinheit aufweist, die zur Ableitung einer räumlichen Orientierung der Reflektoranordnung (20) relativ zu einer Ausbreitungsachse der in den
Retroreflektor (21,22,41) eintretenden Messstrahlung bezüglich zumindest eines Freiheitsgrads anhand der Auftreffposition eingerichtet ist, insbesondere wobei ein Gierwinkel relativ zur Ausbreitungsachse bestimmbar ist, insbesondere mittels fortlaufender Erfassung der Auftreffposition.

5. Reflektoranordnung (20) nach einem der vorangehenden Ansprüche,
**dadurch gekennzeichnet, dass**
die erste optische Baugruppe (25,25',26) eine Mehrzahl von sphärischen Linsen, insbesondere zwei sphärische Linsen und/oder eine optische Komponente mit einer asphärischen Oberfläche aufweist, insbesondere wobei die sphärischen Linsen und/oder die optische Komponente aus Glas gefertigt sind.

6. Reflektoranordnung (20) nach einem der vorangehenden Ansprüche,
**dadurch gekennzeichnet, dass** die Reflektoranordnung (20) ein optisches Kopplungselement (27,28,47,48) zwischen dem Retroreflektor (21,22,41) und der optischen Baugruppe (25,25',26) aufweist, wobei
• ein Zusammenwirken des optischen Kopplungselements (27,28,47,48) mit dem Retroreflektor (21,22,41) und der optischen Baugruppe (25,25',26) eine vergrösserte Lichtbrechkraft der Reflektoranordnung (20) bereitstellt, und
• das optisches Kopplungselement (27,28,47,48) insbesondere den Retroreflektor (21,22,41) und/oder die optische Baugruppe (25,25',26) kontaktiert.

7. Reflektoranordnung (20) nach Anspruch 6,
**dadurch gekennzeichnet, dass** das optische Kopplungselement (27,28,47,48) als anamorphotisches Kopplungselement ausgebildet ist, insbesondere wodurch in unterschiedliche Richtungen orthogonal zu einer optischen Achse des Kopplungselements (27,28,47,48) unterschiedliche Brechkräfte bereitgestellt werden.

8. Reflektoranordnung (20) nach einem der vorangehenden Ansprüche,
**dadurch gekennzeichnet, dass**
der Retroreflektor (21,22,41) als Prisma, insbesondere Tripelprisma, insbesondere verspiegelt, ausgebildet ist und das Prisma
• eine ein Dreieck bildende Lichteintrittsfläche (31,32) und
• die der Lichteintrittsfläche (31,32) gegenüberliegende Durchtrittsfläche (33,34) als Apertur aufweist, insbesondere wobei
• die Durchtrittsfläche (33,34) an einer Ecke des Prismas gebildet ist, insbesondere wobei die Durchtrittsfläche (33,34) durch eine ausgesparte Ecke des Prismas gebildet ist und ebenfalls ein Dreieck definiert, und/oder
• die durch die erste optische Baugruppe (25,25',26) definierte optische Achse parallel zur Durchtrittsfläche (33,34) verläuft.

9. Reflektoranordnung (20) nach einem der vorangehenden Ansprüche,
**dadurch gekennzeichnet, dass**
die Reflektoranordnung (20) als 360°-Retroreflektor mit einer Mehrzahl von, insbesondere mit sechs, aneinander angrenzend angeordneten und als Prismen ausgebildeten Retroreflektoren (21,22,41), die gemäss Anspruch 8 ausgebildet sind, ausgebildet ist, wobei
• die Mehrzahl der Prismen ringförmig angeordnet sind, insbesondere einen Ring bilden, und
• der 360°-Retroreflektor ein azimutales Gesamtsichtfeld von 360° definiert,
insbesondere wobei die optischen Achsen zumindest zweier, insbesondere dreier, Prismen (21,22,41) einen gemeinsamen Schnittpunkt mit einer Zentralachse (A) aufweisen, wobei die Lage einer optischen Achse eines Prismas durch die jeweiligen Mittelpunkte von dessen Lichteintrittsfläche und von dessen Durchtrittsfläche (33,34) definiert ist, insbesondere wobei die durch die ringförmige Anordnung der Prismen (21,22,41) definierte Zentralachse (A) parallel oder koaxial zur optischen Achse der ersten optischen Baugruppe (25,25',26) verläuft.

10. Reflektoranordnung (20) nach Anspruch 9,
**dadurch gekennzeichnet, dass**
die Reflektoranordnung (20) eine zweite Sensoranordnung mit einer zweiten optischen Baugruppe (25,25',26) und einem zweiten Sensor (23,24) aufweist, wobei die erste Sensoranordnung einer ersten Prismengruppe und die zweite Sensoranordnung einer zweiten Prismengruppe zugeordnet ist, insbesondere wobei die erste und die zweite Prismengruppe jeweils drei Prismen (21,22,41) aufweist.

11. Reflektoranordnung (20) nach Anspruch 10,
**dadurch gekennzeichnet, dass**
• die erste Prismengruppe und die erste Sensoranordnung eine Erfassung der durch die erste Prismengruppe bereitstellbaren und mittels der ersten optischen Baugruppe (25,25',26) auf den ersten Sensor (23,24) projizierbaren Orientierungsmessstrahlung durch den ersten Sensor (23,24) bereitstellen und
• die zweite Prismengruppe und die zweite Sensoranordnung eine Erfassung der durch die zweite Prismengruppe bereitstellbaren und mittels der zweiten optischen Baugruppe (25,25',26) auf den zweiten Sensor (23,24) projizierbaren Orientierungsmessstrahlung durch den zweiten Sensor (23,24) bereitstellen,
insbesondere wobei die optische Achse der ersten und die optische Achse der zweiten Sensoranordnung parallel oder koaxial ausgerichtet sind und die jeweiligen Erfassungsrichtungen der ersten und der zweiten Sensoranordnung entgegengesetzt sind.

12. Reflektoranordnung (20) nach Anspruch 10 oder 11,
**dadurch gekennzeichnet, dass**
• die Mittelpunkte der Durchtrittsflächen (33,34) der Prismen der ersten Prismengruppe in einer ersten Ebene und die Mittelpunkte der Durchtrittsflächen (33,34) der Prismen (21,22,41) der zweiten Prismengruppe in einer zweiten Ebene liegen und
• die erste Ebene und die zweite Ebene parallel zueinander ausgerichtet sind und einen bestimmten Abstand aufweisen, insbesondere wobei die Ebenen im Wesentlichen orthogonal zu der durch die erste optische Baugruppe (25,25',26) definierten optischen Achse liegen.

13. Reflektoranordnung (20) nach einem der vorangehenden Ansprüche,
**dadurch gekennzeichnet, dass**
zumindest der erste Sensor (23,24) als polarisationsauflösender Sensor ausgebildet ist, wobei
• benachbarten Sensorpixeln unterschiedlich polarisationssensitive Matrixelemente zugeordnet sind und
• der Sensor eine Berechnung des Stokes-Vektor anhand einer Intensitätsauswertung der benachbarten Sensorpixel bereitstellt.

14. Reflektoranordnung (20) nach einem der vorangehenden Ansprüche,
**dadurch gekennzeichnet, dass**
die Reflektoranordnung (20) eine Steuerungseinheit mit einer Erfassungsfunktionalität aufweist, wobei die Erfassungsfunktionalität zur ortsaufgelösten Detektion der Orientierungsmessstrahlung mittels mehrfachem Auslesen des Sensors konfiguriert ist, wobei zumindest ein erstes Auslesen mit einer Messinformation bezüglich auf die Detektionsfläche auftreffender Orientierungsmessstrahlung erfolgt und ein zweites Auslesen ohne diese Messinformation erfolgt, insbesondere wobei das erste und das zweite Auslesen synchronisiert mit einem An- und Ausschalten einer Emission der Messstrahlung erfolgen.

15. Messhilfsinstrument, insbesondere Lotstab, Vermessungsstab oder Tastwerkzeug, mit einer Reflektoranordnung (20) nach einem der Ansprüche 1 bis 14, wobei das Messhilfsinstrument zur kontaktlosen oder taktilen Erfassung eines Zielpunkts an einem Objekt mit definiertem Positionsbezug zu der Reflektoranordnung (20) ausgebildet ist.

## Claims

1. Reflector arrangement (20), in particular for industrial and/or geodetic surveying, comprising
• a retroreflector (21, 22, 41), which provides a passage surface (33, 34) for at least one part of measurement radiation entering the retroreflector (21, 22, 41) as orientation measurement radiation,
• a first sensor arrangement, by means of which the orientation measurement radiation passing through the retroreflector (21, 22, 41) is acquirable,
**characterized in that**
the first sensor arrangement comprises
• a first optical assembly (25, 25', 26) providing a fisheye lens, and
• a first sensor (23, 24),
wherein the retroreflector (21, 22, 41) and the first sensor arrangement are arranged in such a way that orientation measurement radiation passing through the retroreflector (21, 22, 41) is deflectable and in particular focusable onto the detection surface of the first sensor (23, 24) by means of the first optical assembly (25, 25', 26).

2. Reflector arrangement (20) according to Claim 1,
**characterized in that**
• the first optical assembly (25, 25', 26) defines a field of view having
□ an elevative acquisition angle of up to 130° with respect to the optical axis and
□ an azimuthal acquisition angle of 360°,
□ and
• the detection surface of the first sensor (23, 24) is arranged in such a way that the field of view of the optical assembly (25, 25', 26) is imageable onto the detection surface,
and/or
the reflector arrangement (20) has a total field of view having
• an elevative acquisition angle of at least 30° and up to 60° and
• an azimuthal acquisition angle of 360°.

3. Reflector arrangement (20) according to Claim 1 or 2,
**characterized in that**
the first sensor (23, 24)
• is configured for determining an impingement position of the orientation measurement radiation on the detection surface, in particular for determining a centroid of the impingement position, and/or
• is embodied for image acquisition and the impingement position of the orientation measurement radiation is acquirable in an image.

4. Reflector arrangement (20) according to Claim 3,
**characterized in that**
the reflector arrangement (20) comprises an evaluation unit designed for deriving a spatial orientation of the reflector arrangement (20) relative to a propagation axis of the measurement radiation entering the retroreflector (21, 22, 41) with respect to at least one degree of freedom on the basis of the impingement position, in particular wherein a yaw angle relative to the propagation axis is determinable, in particular by means of continuous acquisition of the impingement position.

5. Reflector arrangement (20) according to any one of the preceding claims,
**characterized in that**
the first optical assembly (25, 25', 26) comprises a plurality of spherical lens elements, in particular two, and/or an optical component having an aspherical surface, in particular wherein the spherical lens elements and/or the optical component are/is produced from glass.

6. Reflector arrangement (20) according to any one of the preceding claims,
**characterized in that**
the reflector arrangement (20) comprises an optical coupling element (27, 28, 47, 48) between the retroreflector (21, 22, 41) and the optical assembly (25, 25', 26), wherein
• an interaction of the optical coupling element (27, 28, 47, 48) with the retroreflector (21, 22, 41) and the optical assembly (25, 25', 26) provides an increased light refractive power of the reflector arrangement (20), and
• the optical coupling element (27, 28, 47, 48) contacts in particular the retroreflector (21, 22, 41) and/or the optical assembly (25, 25', 26).

7. Reflector arrangement (20) according to Claim 6,
**characterized in that**
the optical coupling element (27, 28, 47, 48) is embodied as an anamorphic coupling element, in particular whereby different refractive powers are provided in different directions orthogonal to an optical axis of the coupling element (27, 28, 47, 48).

8. Reflector arrangement (20) according to any one of the preceding claims,
**characterized in that**
the retroreflector (21, 22, 41) is embodied as a prism, in particular a triple prism, in particular in reflectively coated fashion, and the prism comprises
• a light entrance surface (31, 32) forming a triangle, and
• the passage surface (33, 34) as aperture, said passage surface being situated opposite the light entrance surface (31, 32),
in particular wherein
• the passage surface (33, 34) is formed at a corner of the prism, in particular wherein the passage surface (33, 34) is formed by a cut-out corner of the prism and likewise defines a triangle, and/or
• the optical axis defined by the first optical assembly (25, 25', 26) extends parallel to the passage surface (33, 34).

9. Reflector arrangement (20) according to any one of the preceding claims,
**characterized in that**
the reflector arrangement (20) is embodied as a 360° retroreflector comprising a plurality of, in particular comprising six, retroreflectors (21, 22, 41) embodied according to Claim 8, said retroreflectors being arranged in a manner adjoining one another and being embodied as prisms, wherein
• the plurality of prisms are arranged in a ring-shaped manner, in particular form a ring, and
• the 360° retroreflector defines an azimuthal total field of view of 360°,
in particular wherein the optical axes of at least two, in particular three, prisms (21, 22, 41) have a common point of intersection with a central axis (A), wherein the position of an optical axis of a prism is defined by the respective midpoints of the light entrance surface of said prism and of the passage surface (33, 34) of said prism,
in particular wherein the central axis (A) defined by the ring-shaped arrangement of the prisms (21, 22, 41) extends parallel or coaxially with respect to the optical axis of the first optical assembly (25, 25', 26) .

10. Reflector arrangement (20) according to Claim 9,
**characterized in that**
the reflector arrangement (20) comprises a second sensor arrangement comprising a second optical assembly (25, 25', 26) and a second sensor (23, 24), wherein the first sensor arrangement is assigned to a first prism group and the second sensor arrangement is assigned to a second prism group, in particular wherein the first and second prism groups each comprise three prisms (21, 22, 41).

11. Reflector arrangement (20) according to Claim 10,
**characterized in that**
• the first prism group and the first sensor arrangement provide an acquisition, by the first sensor (23, 24), of the orientation measurement radiation which is providable by the first prism group and is projectable onto the first sensor (23, 24) by means of the first optical assembly (25, 25', 26) and
• the second prism group and the second sensor arrangement provide an acquisition, by the second sensor (23, 24), of the orientation measurement radiation which is providable by the second prism group and is projectable onto the second sensor (23, 24) by means of the second optical assembly (25, 25', 26),
in particular wherein the optical axis of the first sensor arrangement and the optical axis of the second sensor arrangement are aligned parallel or coaxially and the respective acquisition directions of the first sensor arrangement and of the second sensor arrangement are opposite.

12. Reflector arrangement (20) according to Claim 10 or 11,
**characterized in that**
• the midpoints of the passage surfaces (33, 34) of the prisms of the first prism group lie in a first plane and the midpoints of the passage surfaces (33, 34) of the prisms (21, 22, 41) of the second prism group lie in a second plane and
• the first plane and the second plane are aligned parallel to one another and are at a specific distance, in particular wherein the planes lie substantially orthogonal to the optical axis defined by the first optical assembly (25, 25', 26).

13. Reflector arrangement (20) according to any one of the preceding claims,
**characterized in that**
at least the first sensor (23, 24) is embodied as a polarization-resolving sensor, wherein
• adjacent sensor pixels are assigned differently polarization-sensitive matrix elements and
• the sensor provides a calculation of the Stokes vector on the basis of an intensity evaluation of the adjacent sensor pixels.

14. Reflector arrangement (20) according to any one of the preceding claims,
**characterized in that**
the reflector arrangement (20) comprises a control unit having an acquisition functionality, wherein the acquisition functionality is configured for the spatially resolved detection of the orientation measurement radiation by means of multiple read-out of the sensor, wherein at least a first read-out is effected with measurement information regarding orientation measurement radiation impinging on the detection surface and a second read-out is effected without said measurement information,
in particular wherein the first read-out and the second read-out are effected in a manner synchronized with switching on and switching off an emission of the measurement radiation.

15. Auxiliary measuring instrument, in particular plumb rod, surveying rod or probe tool, comprising a reflector arrangement (20) according to any one of Claims 1 to 14, wherein the auxiliary measuring instrument is embodied for the non-contact or tactile acquisition of a target point at an object with a defined position reference with respect to the reflector arrangement (20).

## Revendications

1. Arrangement de réflecteur (20), en particulier pour l'arpentage industriel ou géodésique, doté
- d'un rétroréflecteur (21, 22, 41), lequel fournit une surface de passage (33, 34) pour au moins une partie du faisceau de mesure pénétrant dans le rétroréflecteur (21, 22, 41) en tant que faisceau de mesure d'orientation,
- d'un premier arrangement de capteurs comportant un premier capteur (21, 22, 24), au moyen duquel le faisceau de mesure d'orientation traversant le rétroréflecteur (21, 22, 41) peut être saisi, **caractérisé en ce que**
le premier arrangement de capteurs comporte un premier assemblage optique (25, 25', 26) fournissant une lentille grand angle,
dans lequel le rétroréflecteur (21, 22, 41) et le premier arrangement de capteurs sont disposés de telle sorte que le faisceau de mesure d'orientation traversant le rétroréflecteur (21, 22, 41) peut être dévié et en particulier focalisé sur la surface de détection du premier capteur (23, 24) au moyen du premier assemblage optique (25, 25', 26) .

2. Arrangement de réflecteur (20) selon la revendication 1,
**caractérisé en ce que**
- le premier assemblage optique (25, 25', 26) définit un champ de vision avec
∘ un angle de détection en élévation allant jusqu'à 130° par rapport à l'axe optique et
∘ un angle de détection azimutal de 360° et
- la surface de détection du premier capteur (23, 24) est disposée de telle sorte que le champ de vision de l'assemblage optique (25, 25', 26) peut être reproduit sur la surface de détection et/ou
l'arrangement de réflecteur (20) comporte un champ de vision total avec
- un angle de détection en élévation d'au moins 30° et allant jusqu'à 60° et
- un angle de détection azimutal de 360°.

3. Arrangement de réflecteur (20) selon la revendication 1 ou 2,
**caractérisé en ce que**
le premier capteur (23, 24)
- est configuré pour déterminer une position d'incidence du faisceau de mesure d'orientation sur la surface de détection, en particulier pour déterminer un barycentre de la position d'incidence, et/ou
- est réalisé pour l'acquisition d'image et la position d'incidence du faisceau de mesure d'orientation peut être saisie dans une image.

4. Arrangement de réflecteur (20) selon la revendication 3,
**caractérisé en ce que**
l'arrangement de réflecteur (20) comporte une unité de traitement, laquelle est agencée pour dériver à l'aide de la position d'incidence une orientation spatiale de l'arrangement de réflecteur (20) relativement à un axe de propagation du faisceau de mesure pénétrant dans le rétroréflecteur (21, 22, 41) par rapport à au moins un degré de liberté, en particulier dans lequel un angle de lacet relativement à l'axe de propagation peut être déterminé, en particulier au moyen d'une saisie en continu de la position d'incidence.

5. Arrangement de réflecteur (20) selon l'une des revendications précédentes,
**caractérisé en ce que**
le premier assemblage optique (25, 25', 26) comporte une pluralité de lentilles sphériques, en particulier deux lentilles sphériques et/ou un composant optique doté d'une surface asphérique, en particulier dans lequel les lentilles sphériques et/ou le composant optique sont en verre.

6. Arrangement de réflecteur (20) selon l'une des revendications précédentes,
**caractérisé en ce que**
l'arrangement de réflecteur (20) comporte un élément de couplage optique (27, 28, 47, 48) entre le rétroréflecteur (21, 22, 41) et l'assemblage optique (25, 25', 26), dans lequel
- une coopération de l'élément de couplage optique (27, 28, 47, 48) avec le rétroréflecteur (21, 22, 41) et l'assemblage optique (25, 25', 26) fournit une puissance optique augmentée de l'arrangement de réflecteurs (20), et
- l'élément de couplage optique (27, 28, 47, 48) entre en contact en particulier avec le rétroréflecteur (21, 22, 41) et/ou avec l'assemblage optique (25, 25', 26).

7. Arrangement de réflecteur (20) selon la revendication 6,
**caractérisé en ce que**
l'élément de couplage optique (27, 28, 47, 48) est réalisé comme élément de couplage d'anamorphose, en particulier grâce auquel des puissances optiques différentes peuvent être fournies dans différentes directions orthogonales à un axe optique de l'élément de couplage (27, 28, 47, 48).

8. Arrangement de réflecteur (20) selon l'une des revendications précédentes,
**caractérisé en ce que**
le rétroréflecteur (21, 22, 41) est réalisé comme prisme, en particulier comme prisme triple, en particulier métallisé, et le prisme
- comporte une surface d'entrée de lumière (31, 32) formant un triangle et
- comporte comme ouverture la surface de passage (33, 34) opposée à la surface d'entrée de lumière (31, 32)
en particulier dans lequel
- la surface de passage (33, 34) est formée à un coin du prisme, en particulier dans lequel la surface de passage (33, 34) est formée par un coin découpé du prisme et définit également un triangle, et/ou
- l'axe optique défini par le premier assemblage optique (25, 25', 26) est parallèle à la surface de passage (33, 34).

9. Arrangement de réflecteur (20) selon l'une des revendications précédentes,
**caractérisé en ce que**
l'arrangement de réflecteur (20) est réalisé comme rétroréflecteur 360° doté d'une pluralité de rétroréflecteurs (21, 22, 41), en particulier six, réalisés conformément à la revendication 8, disposés de manière adjacente l'un à l'autre et réalisés comme prismes, dans lequel
- la pluralité des prismes est disposée de manière circulaire et forme en particulier un anneau, et
- le rétroréflecteur 360° définit un champ de vision total azimutal de 360°
en particulier dans lequel les axes optiques d'au moins deux, en particulier trois, prismes (21, 22, 41) comportent un point d'intersection commun avec un axe central (A), dans lequel la position d'un axe optique d'un prisme est définie par les points médians respectifs de sa surface d'entrée de lumière et de sa surface de passage (33, 34), en particulier dans lequel l'axe central (A) défini par l'arrangement circulaire des prismes (21, 22, 41) est parallèle ou coaxial à l'axe optique du premier assemblage optique (25, 25', 26).

10. Arrangement de réflecteur (20) selon la revendication 9,
**caractérisé en ce que**
l'arrangement de réflecteur (20) comporte un deuxième arrangement de capteurs doté d'un deuxième assemblage optique (25, 25', 26) et d'un deuxième capteur (23, 24), dans lequel le premier arrangement de capteurs est associé à un premier groupe de prismes et le deuxième arrangement de capteurs est associé à un deuxième groupe de prismes, en particulier dans lequel le premier et le deuxième groupe de prismes comportent respectivement trois prismes (21, 22, 41).

11. Arrangement de réflecteur (20) selon la revendication 10,
**caractérisé en ce que**
- le premier groupe de prismes et le premier arrangement de capteurs fournissent par le premier capteur (23, 24) une saisie du faisceau de mesure d'orientation pouvant être fourni par le premier groupe de prismes et projetable au moyen du premier assemblage optique (25, 25', 26) sur le premier capteur (23, 24) et
- le deuxième groupe de prismes et le deuxième arrangement de capteurs fournissent par le deuxième capteur (23, 24) une saisie du faisceau de mesure d'orientation pouvant être fourni par le deuxième groupe de prismes et projetable au moyen du deuxième assemblage optique (25, 25', 26) sur le deuxième capteur (23, 24),
en particulier dans lequel l'axe optique du premier et l'axe optique du deuxième arrangement de capteurs sont orientés de manière parallèle ou coaxiale et les directions de saisies respectives du premier et du deuxième arrangement de capteurs sont opposées.

12. Arrangement de réflecteur (20) selon la revendication 10 ou 11,
**caractérisé en ce que**
- les points médians des surfaces de passage (33, 34) des prismes du premier groupe de prismes se trouvent dans un premier plan et les points médians des surfaces de passage (33, 34) des prismes (21, 22, 41) du deuxième groupe de prismes se trouvent dans un deuxième plan et
- le premier plan et le deuxième plan sont orientés parallèlement l'un à l'autre et comportent un écart déterminé, en particulier dans lequel les plans sont sensiblement orthogonaux à l'axe optique défini par le premier assemblage optique (25, 25', 26) .

13. Arrangement de réflecteur (20) selon l'une des revendications précédentes,
**caractérisé en ce que**
au moins le premier capteur (23, 24) est réalisé comme capteur résolvant par polarisation, dans lequel
- des éléments de matrice de sensibilités à la polarisation différentes sont associés à des pixels de capteur contigus et
- le capteur fournit un calcul du vecteur de Stokes à l'aide d'une évaluation d'intensité des pixels de capteur contigus.

14. Arrangement de réflecteur (20) selon l'une des revendications précédentes,
**caractérisé en ce que**
l'arrangement de réflecteur (20) comporte une unité de commande dotée d'une fonctionnalité de saisie, dans lequel la fonctionnalité de saisie est configurée pour la détection spatialement résolue du faisceau de mesure d'orientation au moyen de relevés multiples du capteur, dans lequel au moins un premier relevé s'effectue avec une information de mesure se rapportant au faisceau de mesure d'orientation frappant la surface de détection et un deuxième relevé s'effectue sans cette information de mesure, en particulier dans lequel le premier et le deuxième relevé s'effectuent en synchronisation avec un allumage et un arrêt d'une émission du faisceau de mesure.

15. Instrument de mesure, en particulier tige d'aplomb, canne d'arpentage ou outil palpeur, doté d'un arrangement de réflecteur (20) selon l'une des revendications 1 à 14, dans lequel l'instrument de mesure est réalisé pour la saisie sans contact ou tactile d'un point-cible sur un objet doté d'une position relative définie par rapport à l'arrangement de réflecteur (20).
